# EUROPEAN PATENT SPECIFICATION

(11) **EP 0 651 179 B1**
(45) Date of publication and mention of the grant of the patent: **04.02.1998**
(21) Application number: 94116796.7
(22) Date of filing: 25.10.1994
(51) Int. Cl.: F16G 11/10

(54) **Cord fastening device**
Seilklemme
Dispositif de blocage de corde

(30) Priority: 29.10.1993 JP 294162/93
(43) Date of publication of application: 03.05.1995
(73) Proprietor: YKK CORPORATION, Chiyoda-ku, Tokyo (JP)
(72) Inventor: Takahashi, Yoshinobu, Uozu-shi, Toyama-ken (JP)
(74) Representative: Casalonga, Axel

(56) References cited:
- DE-U- 9 002 225
- JP-U-61 105 023
- US-A- 3 864 790
- US-A- 3 965 544

## Description

This invention relates to a cord fastening device for retaining in a desired position a cord attached to a garment, a bag or the like and inserted through the device.

A conventional cord fastening device in the form of a unitary body comprises, as disclosed in, for example, Japanese Utility Model Laid-open Publication No. SHO 61-105023, a set of mutually complementary T-shape and C-shape body members which have respective through holes and are integral with resilient arm and bridge portions. The T-shape and C-shape body members are resiliently spaced apart from each other so that the cord inserted through the through holes is bent between the through holes and is hence retained therebetween.

In the above-mentioned conventional art, since the cord retaining force corresponds to the frictional force of the bent cord with respect to the through holes due to the spreading force of the arm and bridge portions, the retaining force is weak and the arm tends to be broken in use.

With the foregoing prior art problems in view, it is an object of this invention to provide a cord fastening device which facilitates insertion of a cord and can retain the cord reliably.

According to this invention, there is provided a cord fastening device comprising:
(a) upper and lower body members integrally joined together by a support post;
(b) a first operating portion situated opposite to said support post and confronting said lower body member in a common plane when the first operating portion is not operated via a connecting portion integrally extending from said upper body member;
(c) a second operating portion situated opposite to said support post and confronting said upper body member in a common plane when the second operating portion is not operated via another connecting portion integrally extending from said lower body member the operating portions being gripped to come into contact with each other as the upper and lower body members are resiliently deformed outwardly along with the support post bridging between the two body members ; and
(d) said upper and lower body members having on their inside surfaces retaining claws for retaining a cord when the cord is inserted through said device.

The first and second operating portions can be, respectively, lower and upper ones.

Further, the upper and lower body members and the upper and lower operating portions are located in rotation symmetry with respect to the axis extending in a direction in which the cord is to be inserted. The retaining claw of one of the upper and lower body members has a cord receiving recess for receiving the cord, whereby the cord may be held jointly by an end surface of the retaining claw and the cord receiving recess.

In the cord fastening device of this invention, the upper and lower body members will be spaced apart from each other by depressing the operating portions toward each other, whereupon the cord is inserted between the upper and lower body members. When the depression of the operating portions are released, the inserted cord will be resiliently held by the retaining claws formed inside surfaces of the upper and lower body members.
FIG. 1 is a perspective view, with parts broken away, of a cord fastening device according to a first embodiment of this invention;
FIG. 2 is a plan view of the cord fastening device of the first embodiment;
FIG. 3 is a side view of the cord fastening device of the first embodiment;
FIG. 4 is a side view of the cord fastening device of the first embodiment, showing the manner in which the operating portions are depressed when a cord is inserted through the device;
FIG. 5 is a perspective view, with parts broken away, of the cord fastening device of the first embodiment, showing the manner in which the depression of the operating portions are released.
FIG. 6 is a side view of FIG. 5.
FIG. 7 is a perspective view, with parts broken away, of the cord fastening device of the first embodiment;
FIG. 8 is a side view of a cord fastening device according to a second embodiment of the invention;
FIG. 9 is a perspective view, with parts broken away, of a cord fastening device according to a third embodiment of the invention;
FIG. 10 is a side view, with parts broken away, of a cord fastening device according to a fourth embodiment of the invention;
FIG. 11 is a plan view of a cord fastening device according to a fifth embodiment of the invention; and
FIG. 12 is a side view of the cord fastening device of the fifth embodiment.

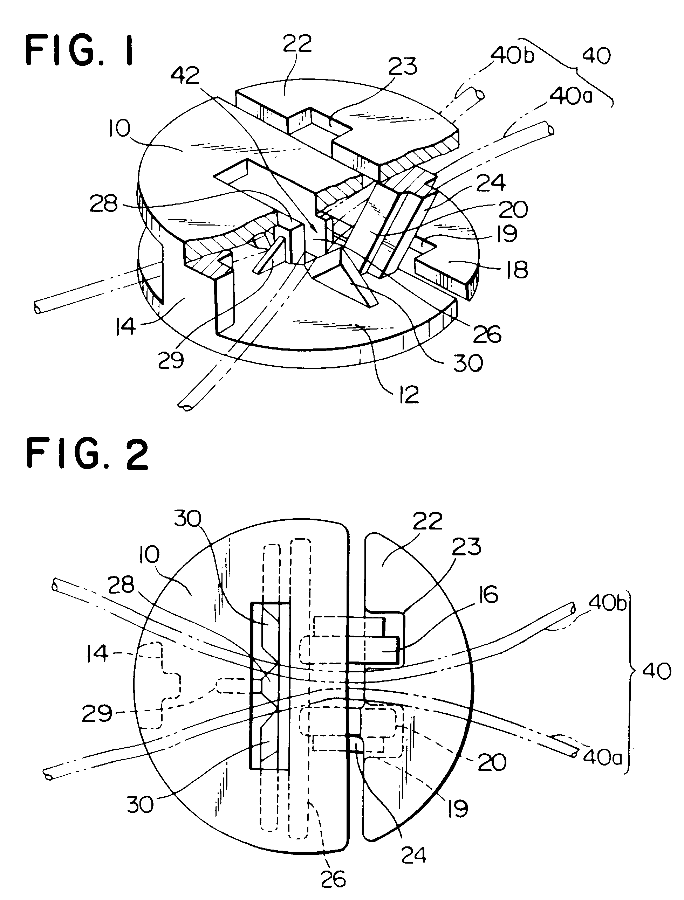

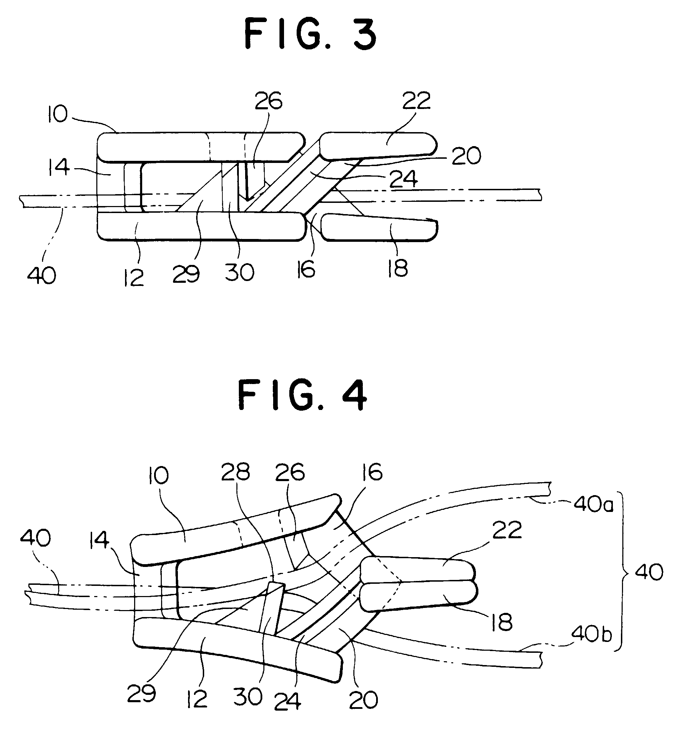

Embodiments of this invention will now be described with reference to the accompanying drawings. FIGS. 1 through 7 show a cord fastening device according to a first embodiment of this invention. The cord fastening device of this embodiment comprises upper and lower body members 10, 12 each in the form of a plate having a shape slightly larger than a semi-circle, the upper and lower body members 10, 12 being integrally joined together by a support post 14 extending between their edges. The upper body member 10 has a lower operating portion 18 situated opposite to the support post 14 and confronting the lower body member 12 in a horizontal plane via a connecting portion 16 integrally projecting from the upper body member 10. The lower body member 12 has an upper operating portion 22 situated opposite to the support post 14 and confronting the upper body member 10 in a horizontal plane via another connecting portion 20 integrally projecting from the lower body member 12. Each of the connecting portions 16, 20 has on its outer surface a reinforcing rib 24. The upper and lower operating portions 22, 18 are situated in confronting relationship with the upper and lower body members 10, 12 edge to edge and jointly have a circular disc-like appearance. The upper operating portion 22 confronting the connecting portion 16 has in its edge a cutout 23 so as to avoid interference with the connecting portion 16. Likewise, the lower operating portion 18 confronting the connecting portion 20 also has a cutout 19. The upper and lower body members 10, 12 and the upper and lower operating portions 22, 18 are situated in rotation symmetry with respect to the axis extending in a direction in which a cord is to be inserted through the device.

The upper body member 10 has on its inside surface a downwardly directed upper claw 26 as a retaining claw in the form of a flat plate with a lower blade-like edge. The lower body member 12 has on its inside surface a lower central claw 28 as a retaining claw and a pair of triangular lower side claws 30 one at each side of lower, claw 28. The lower claw 28 has on its side surface a reinforcing rib 29, and the opposite sides of the lower claw 28 and each lower side claw 30 jointly define a cord receiving recess 42 for receiving the cord 40. In the cord fastening device of this embodiment, the upper body member 10, the lower body member 12, the support post 14, the connecting portions 16, 20, the lower operating portion 18, the upper operating portion 22, and the claws 26, 28, 30 are molded of resin in a unitary form.

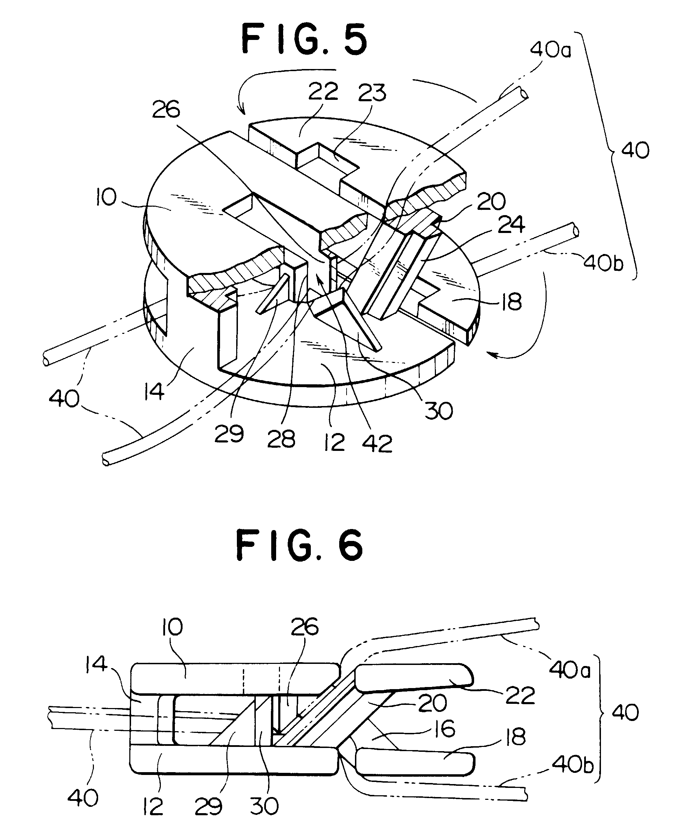

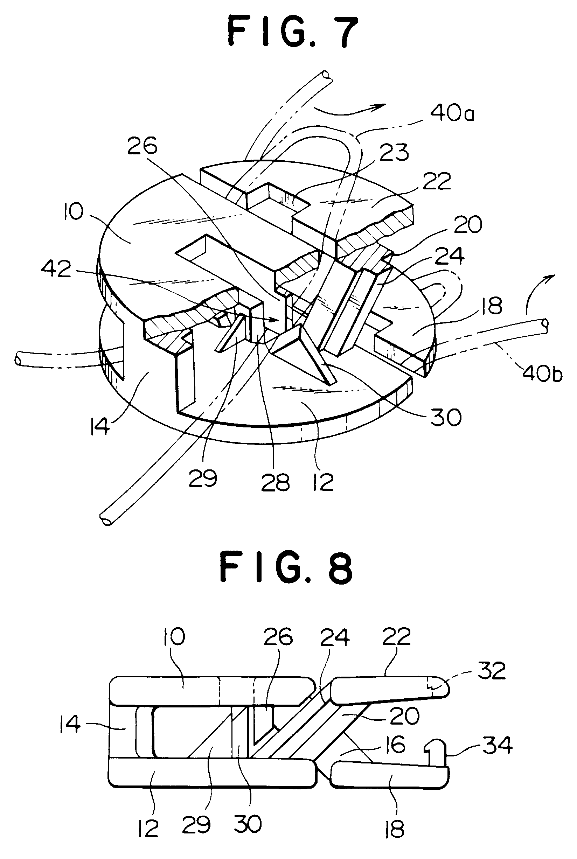

In use, for inserting the cord 40 through the cord fastening device of this embodiment, as shown in FIG. 4, the operating portions 22, 18 are gripped to come into contact with each other as the upper and lower body members 10, 12 are resiliently deformed outwardly along with the support post 14 bridging between the two body members 10, 12. As a result, the overlapping portion of the upper and lower claws 26, 28 will become smaller so that the distance between the cord receiving recess 42 (FIG. 1) and the upper claw 26 will be increased. In this state, a pair portions of the cords 40a and 40b are threaded through the opposite cord receiving recesses 42, respectively, as shown in FIG. 4 and the depression of the operating portions 18, 22 is released, whereupon the cord 40a extending over the upper operating portion 22 as shown in FIGS. 5 and 6 is inserted inside the connecting portion 20 via the gap between the upper body member 10 and the upper operating portion 22 from outside of the other connecting portion 16 as shown in FIG. 7. Likewise the other cord portion 40b extending under the lower operating portion 18 is inserted inside the connecting portion 16 via the gap between the lower body member 12 and the lower operating portion 18 from outside of the connecting portion 20 as shown in FIG. 7. Thus, as shown in FIGS. 1 through 3, as the cords 40a and 40b are inserted inside the connecting portions 16, 20, respectively, the cords 40a, 40b are depressed in the cord receiving recess 42 by the upper claw 26 and are stably held at side surfaces by the lower central claw 28 and the lower side claws 30.

According to the cord fastening device of this embodiment, partly since the cord 40 is held stably in the cord receiving recess 42 by the upper claw 26, the lower central claw 28 and the lower side claws 30, and partly since the cord 40 is compressed under the resilience of the support post 14, the upper body member 10 and the lower body member 12, it is retained firmly. Accordingly it is unnecessary to insert the cord through any cord insertion hole so that the cord can be inserted through the device with maximum ease. Further, since the support post 14 is located remotely from the operating portions 18, 22, the operating portions 18, 22 can be handled with a small force whereon the retaining force of the upper claw 26, the lower central claw 28 and the lower side claws 30 are great.

A second embodiment of this invention will now be described with reference to FIG. 8. In FIG. 8, parts or elements similar to those of the foregoing embodiment are designated by the same reference numerals as in the forgoing embodiment, so their description is omitted. In the cord fastening device of this embodiment, the upper operating portion 22 has at its outer edge a stepped portion 32, and the lower operating portion 18 has a hook portion 34 engageable with the stepped portion 32 to temporarily lock the operating portions 18, 22 with one another during the insertion of the cord 40.

In use, likewise the cord fastening device of the first embodiment, if the hook portion 34 is brought into engagement with the stepped portion 32 to lock the operating portions 18, 22 with one another when assembled, it is unnecessary to depress the operating portions 18, 22 toward one another during the insertion of the cord 40 so that the cord 40 can be inserted through the device without difficulty. The engagement between the hook portion 34 and the stepped portion 32 can be released by depressing the upper and lower body members 10, 12 toward one another. Although it does not obstruct the use of the device, the hook portion 34 may be taken off by breaking as it is not essential after the cord 40 has been inserted.

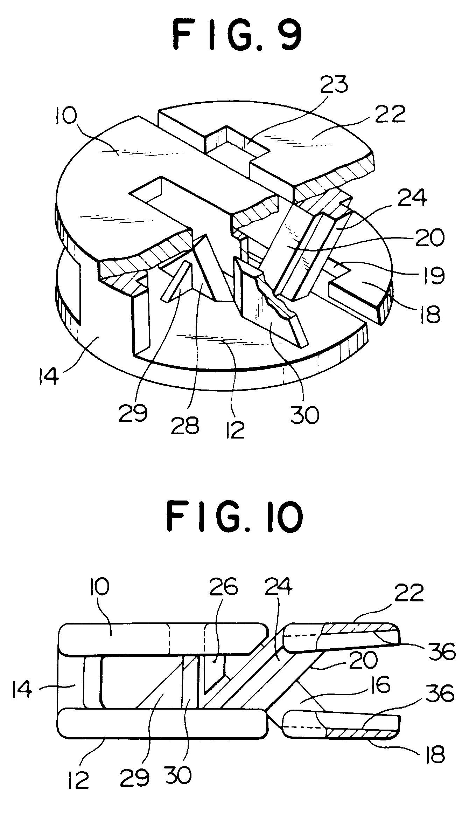

A third embodiment of this invention will now be described with reference to FIG. 9. In FIG. 9, parts or elements similar to those of the foregoing embodiments are designated by the same reference numerals as in the foregoing embodiment, so their description is omitted. In the cord fastening device of this embodiment, likewise the first embodiment, the lower central claw 28 has a triangular shape and the lower side claws 30 have inner edges perpendicular to the lower body member 12. With the cord fastening device of this embodiment, it is possible to obtain the results similar to those of the first embodiment, and the cord 40 is hardly removable in a perpendicular direction to the the cord inserting direction.

A fourth embodiment of this invention will now be described with reference to FIG. 10. In FIG. 10, parts or elements similar to those of the foregoing embodiments are designated by the same reference numerals as in the foregoing embodiment, so their description is omitted. In the cord fastening device of this embodiment, likewise the first embodiment, the confronting inner surfaces of the operating portions 18, 22 have cord escapes 36 extending in the cord inserting direction. With the cord escapes 36, reversely to the steps of the foregoing embodiments, by depressing the operating portions 18, 22 toward one another after the cord 40 is inserted between the operating potions 18, 22, the cord 40 is inserted between the upper and lower body members 10, 12 and can be moved longitudinally.

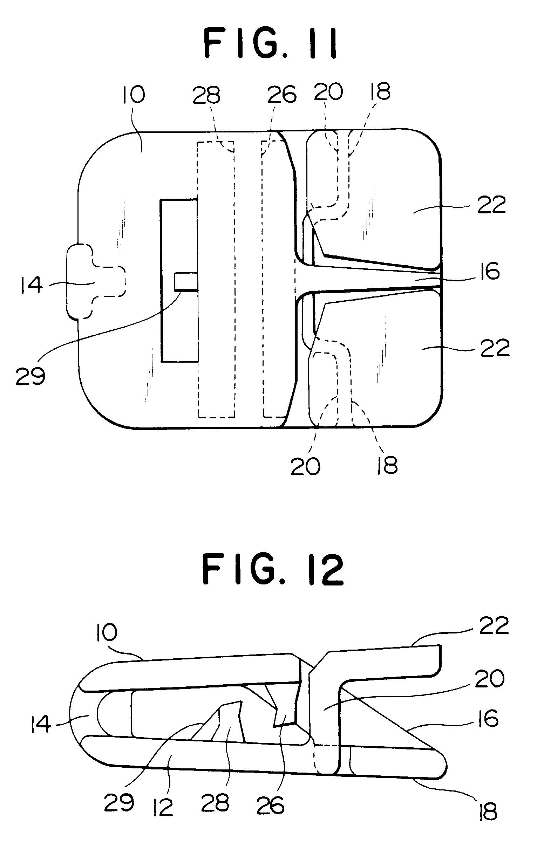

A fifth embodiment of this invention will now be described with reference to FIGS. 11 and 12. In FIGS. 11 and 12, parts or elements similar to those of the foregoing embodiments are designated by the same reference numerals as in the foregoing embodiment, so their description is omitted. The cord fastening device of this embodiment is rectangular in overall appearance, and the connecting portion 16 connected with the upper body member 10 is projecting centrally from the lower operating portion 18. The upper operating portion 22 is divided into two halves one on each of opposite sides of the connecting portion 16. The connecting portion 20 is divided into two halves situated one on each of opposite sides of the connecting portion 16 and perpendicularly extending from the upper operating portion 22 to the lower body member 12. With the cord fastening device of this embodiment, it is possible to obtain the results similar to those of the first embodiment.

In the cord fastening device of this invention, its overall appearance and the shapes of the main body and the operating portions may be determined as desired, and the shapes of the cord retaining claws also may be determined as desired. Further, the substance for the main body may be selected as desired, as far as the individual parts can be molded in a unitary form. Furthermore, the cord fastening device of this invention may be applied to a garment, a bag, shoes, camping tent, or any other thing whose cord is to be fastened.

With the cord fastening device of this inven tion, since the cord is stably held by the retaining claws and is resiliently compressed under the resilience of the support post and the upper and lower body members, it is possible to retain the cord firmly. Further, since the insertion of the cord can be finalized by moving it in a direction perpendicular to the longitudinal direction without inserting it through any cord insertion hole, it is possible to facilitate insertion of the cord. Even if it has a large-diameter portion such as a knot, the cord can be inserted through the device and can be prevented from being removed off the device while in use, securing a high degree of safety.

## Claims

1. A cord fastening device comprising :
(a) upper and lower body members (10, 12) integrally joined together by a support post (14);
(b) a first operating portion (18) situated opposite to said support post (14) and confronting said lower body member (12) in a common plane when the first operating portion (18) is not operated via a connecting portion (16) integrally extending from said upper body member (10);
(c) a second operating portion (22) situated opposite to said support post (14) and confronting said upper body member (10) in a common plane when the second operating portion (22) is not operated via another connecting portion (20) integrally extending from said lower body member (12), the operating portions (22, 18) being gripped to come into contact with each other as the upper and lower body members (10, 12) are resiliently deformed outwardly along with the support post (14) bridging between the two body members (10, 12); and
(d) said upper and lower body members (10, 12) having on their inside surfaces retaining claws (26, 28, 30) for retaining a cord (40) when the cord is inserted through said device.

2. A cord fastening device according to claim 1, characterized in that said first and second operating portions are, respectively, lower and upper ones.

3. A cord fastening device according to claim 1 or 2, characterized in that said upper and lower body members (10, 12) and said first and second operating portions (18, 22) are located in rotation symmetry with respect to the axis extending in a direction in which the cord is to be inserted.

4. A cord fastening device according to claim 1, 2 or 3, characterized in that said retaining claw (28, 30) of one of said upper and lower body members (10, 12) has a cord receiving recess (42) for receiving the cord (40), whereby the cord (40) may be held jointly by an end surface of said retaining claw (26) and said cord receiving recess (42).

## Patentansprüche

1. Seilklemme, umfassend:
(a) obere und untere Körperteile (10, 12), die durch eine Stützsäule (14) einstückig miteinander verbunden sind;
(b) einen ersten Betätigungsbereich (18), der gegenüber der Stützsäule (14) angeordnet und dem unteren Körperteil (12) in einer gemeinsamen Ebene zugekehrt ist, wenn der erste Betätigungsbereich (18) nicht über einen Verbindungsbereich (16) betätigt wird, der sich von dem oberen Körperteil (10) einstückig erstreckt;
(c) einen zweiten Betätigungsbereich (22), der gegenüber der Stützsäule (14) angeordnet und dem oberen Körperteil (10) in einer gemeinsamen Ebene zugekehrt ist, wenn der zweite Betätigungsbereich (22) nicht über einen anderen Verbindungsbereich (20) betätigt wird, der sich von dem unteren Körperteil (12) einstückig erstreckt, wobei die Betätigungsbereiche (22, 18) erfaßt werden, damit sie miteinander in Berührung kommen, wenn das obere und das untere Körperteil (10, 12) elastisch nach außen verformt werden, wobei die Stützsäule (14) die beiden Körperteile (10, 12) überbrückt; und
(d) wobei die oberen und unteren Körperteile (10, 12) an ihren Innenseiten Halteklauen (26, 28, 30) haben, um ein Seil (40) festzuhalten, wenn das Seil in die Seilklemme eingeführt ist.

2. Seilklemme nach Anspruch 1, dadurch **gekennzeichnet,** daß die ersten und zweiten Betätigungsbereiche obere bzw. untere Betätigungsbereiche sind.

3. Seilklemme nach Anspruch 1 oder 2, dadurch **gekennzeichnet,** daß die oberen und unteren Körperteile (10, 12) und die ersten und zweiten Betätigungsbereiche (18, 22) in Bezug auf die Achse, die sich in Einführrichtung des Seils erstreckt, rotationssymmetrisch angeordnet sind.

4. Seilklemme nach Anspruch 1, 2 oder 3, dadurch **gekennzeichnet,** daß die Halteklaue (28, 30) eines der oberen und unteren Körperteile (10, 12) eine Seilaufnahmeausnehmung (42) zur Aufnahme des Seils (40) hat, wodurch das Seil (40) gemeinsam mit einer Endfläche der Halteklaue (26) durch die Seilaufnahmeausnehmung (42) gehalten werden kann.

## Revendications

1. Dispositif de blocage de cordon comprenant:
(a) des éléments de corps supérieur et inférieur (10, 12) rendus solidaires l'un de l'autre par une colonne de support (14);
(b) une première partie d'actionnement (18) située en face de ladite colonne de support (14) et en regard dudit élément de corps inférieur (12) dans un plan commun quand la première partie d'actionnement (18) n'est pas actionnée par l'intermédiaire d'une partie de raccordement (16) depuis ledit élément de corps supérieur (10) auquel elle est intégrée;
(c) une deuxième partie d'actionnement (22) située en face de ladite colonne de support (14) et en regard dudit élément de corps supérieur (10) dans un plan commun quand la deuxième partie d'actionnement (22) n'est pas actionnée par l'intermédiaire d'une autre partie de raccordement (20) s'étendant depuis ledit élément de corps inférieur (12) auquel elle est intégrée, les parties d'actionnement (22, 18) étant serrées de manière à venir en contact l'une avec l'autre lorsque les éléments de corps supérieur et inférieur (10, 12) sont déformés élastiquement vers l'extérieur en même temps que la colonne de support (14) qui établit un pont entre les deux éléments de corps (10, 12); et
(d) lesdits éléments de corps supérieur et inférieur (10, 12) comportant sur leurs surfaces intérieures des griffes de retenue (26, 28, 30) destinée à retenir un cordon (40) quand le cordon est inséré à travers ledit dispositif.

2. Dispositif de blocage de cordon selon la revendication 1, caractérisé en ce que lesdites première et deuxième parties d'actionnement sont, respectivement, des parties d'actionnement inférieure et supérieure.

3. Dispositif de blocage de cordon selon la revendication 1 ou 2, caractérisé en ce que lesdits éléments de corps supérieur et inférieur (10, 12) et lesdites première et deuxième parties d'actionnement (18, 22) sont placées suivant une symétrie de rotation par rapport à l'axe s'étendant dans une direction dans laquelle le cordon doit être inséré.

4. Dispositif de blocage de cordon selon la revendication 1, 2 ou 3, caractérisé en ce que ladite griffe de retenue (28, 30) d'un desdits éléments de corps supérieur et inférieur (10, 12) comporte un évidement (42) récepteur de cordon destiné à recevoir le cordon (40), grâce à quoi le cordon (40) peut être maintenu conjointement par une surface d'extrémité de ladite griffe de retenue (26) et par ledit évidement (42) récepteur de cordon.
